# EUROPEAN PATENT SPECIFICATION

(11) **EP 0 913 593 B1**
(45) Date of publication and mention of the grant of the patent: **04.10.2001**
(21) Application number: 98306645.7
(22) Date of filing: 19.08.1998
(51) Int. Cl.: F16B 31/04, B23P 19/06

(54) **Nut and nut tightening and loosening arrangement**
Mutter und Vorrichtung zum Auf- und Abschrauben einer Mutter
Ecrou et dispositif pour visser et dévisser un écrou

(30) Priority: 24.10.1997 US 957618
(43) Date of publication of application: 06.05.1999
(73) Proprietor: Junkers, John K., Saddle River, New Jersey 07458 (US)
(72) Inventor: Junkers, John K., Saddle River, New Jersey 07458 (US)
(74) Representative: Newby, Martin John

(56) References cited:
- WO-A-94/29080
- FR-A- 2 564 767
- US-A- 4 622 730

## Description

This invention generally relates to nuts and in particular to so-called jack-screw nuts, as well as to a nut tightening and loosening arrangement and to a method of tightening or loosening a joint.

Jack-screw nuts are known in the art, one such known jack-screw nut being disclosed in US-A-4,622,730. The nut disclosed in this reference has an inner screw thread for screw-threaded connection with an end of a bolt and a plurality of allen-type or hex head nut bolts or "screws" which are screwed into threaded bores which extend through the wall of the nut from one to the other axial end of the latter and which are arranged parallel to the axis of the inner screw thread so as to be equally spaced from one another. The ends of the nut bolts remote from their heads project through the threaded bores in the wall of the nut so that, when the nut bolts are turned, they abut against a hardened washer sitting on a face of a joint, so as to lift up the nut and to stretch the bolt with a relatively low input force. The idea of this nut is to have each nut bolt or "screw" of the jack-screw nut carry an equal portion of the created bolt load.

This known arrangement has however the following disadvantages. It is necessary to screw or torque down each of the nut bolts onto the washer at a given torque in a given sequence. As the coefficient of friction changes, however, each nut bolt as it is torqued down creates a side load by tilting the nut. It is therefore very difficult to keep the washer face parallel to the nut face which is important for several reasons. If the washer face and the facing nut face are not parallel to each other, one of the nut bolts might carry a larger load than the rest. It either bends or "mushrooms out" destroying the integrity of the nut. Also, if the washer and the nut face are not parallel to one another, a bending force is applied to the bolt to which the nut is connected since the nut does not sit completely perpendicular to the bolt axis.

It is therefore an aim of the present invention to provide a nut which avoids the disadvantage of the prior art. It is also an aim of the present invention to provide a nut tightening/loosening arrangement which avoids the disadvantage of the prior art.

According to one aspect of the present invention there is provided a nut as claimed in the ensuing claim 1.

According to another aspect of the present invention there is provided a nut tightening and loosening arrangement as claimed in the ensuing claim 5.

When the nut and the nut tightening and loosening arrangement are designed in accordance with the present invention, they eliminate the disadvantages of the prior art and provide for highly advantageous results.

The novel features which are considered as characteristic for the present invention are set forth in particular in the appended claims. The invention itself, however, both as to its construction and its method of operation, together with additional objects and advantages thereof, will be best understood from the following description of specific embodiments when read in connection with the accompanying drawings, in which:

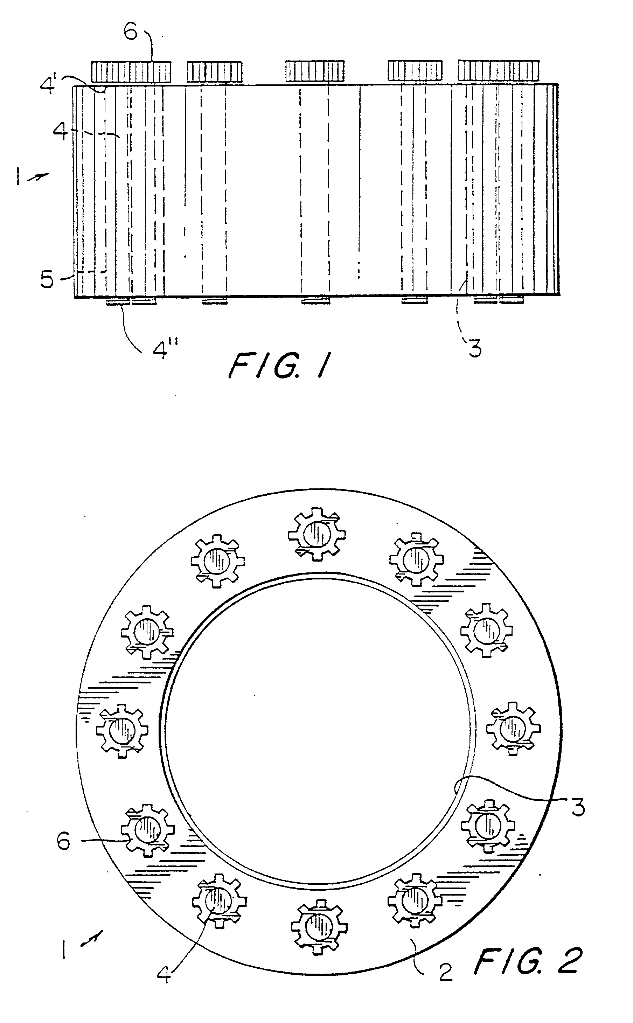

Figures 1 and 2 are a side view and a plan, respectively, of a nut in accordance with the present invention;
Figure 3 is a partly sectioned view of one embodiment of a connecting element connectable to a tool and used for tightening or loosening a nut in accordance with the present invention;
Figure 4 is a partly sectioned view of another embodiment of a connecting element connectable to a tool and used for tightening or loosening a nut in accordance with the present invention; and
Figure 5 is a sectional view showing a process of tightening or loosening a nut in accordance with the present invention.

In the drawings reference numeral 1 identifies a nut in accordance with the present invention comprising a substantially cylindrical nut member 2 having an inner screw thread 3 for screw-threaded engagement with a bolt, stud or the like. The nut member 2 is provided with a plurality of screw-threaded bolts or screw members 4 which are screwed in a plurality of screw threaded holes 5 extending from one to the other end of the nut member 2. The threaded holes 5 are arranged parallel to the axis of the inner thread 3 of the nut member 2, are conveniently spaced from one another by substantially equal peripheral distances and are preferably equally spaced radially from the axis of the inner thread 3.

Each screw member 4 has a first end 4" adapted to abut against an object, as will be explained hereinbelow, and an opposite second end 4'. A gear 6 in the form of a pinion is non-rotatably mounted on the end 4' of each screw member 4 for joint rotation of the screw members. The screw members 4 and their gears 6 are arranged so that the gears 6 can be engaged by a tool and turned simultaneously.

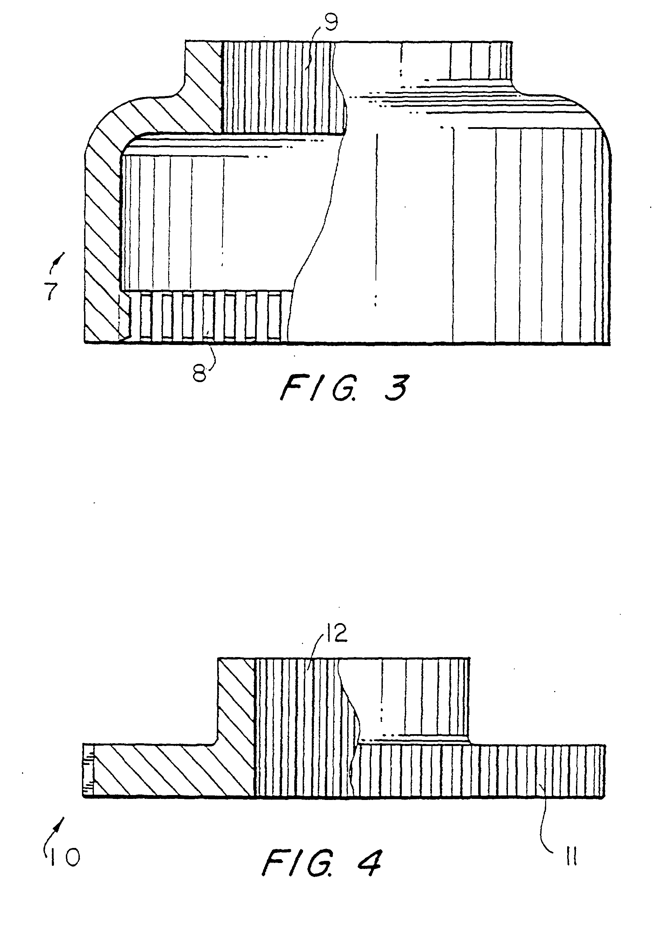

Figure 3 shows a connecting element in the form of a hollow socket 7 which can simultaneously engage all the gears 6 of the screw members 4 and is turnable when connected to a tool (not shown). The socket 7 has a first end provided with a plurality of internal teeth 8 for meshing with external teeth of the pinions or gears 6 and a second end provided with formations, such as for example a plurality of axially extending splines 9, for engagement with a plurality of corresponding splines of a drive shaft of a tool, e.g. a power tool. The internal teeth 8 of the socket 7 outwardly engage or mesh with the gears 6 of the screws 4 of the nut 1.

Figure 4 shows an alternative connecting element 10 in the form of a disk-like member have a plurality of outer teeth 11 for meshing engagement with the teeth of the gears 6 of the screw members 4 of the nut 1. The element 10 also has a central hollow formation formed, for example, by a plurality of splines 12 for engagement with splines of a drive shaft of a tool (not shown). The outer teeth 11 of the intermediate element 10 engage inwardly with the gears 6 of the screw members 4 of the nut 1.

The nut in accordance with the present invention and in particular a joint incorporating such a nut operates in the following manner:

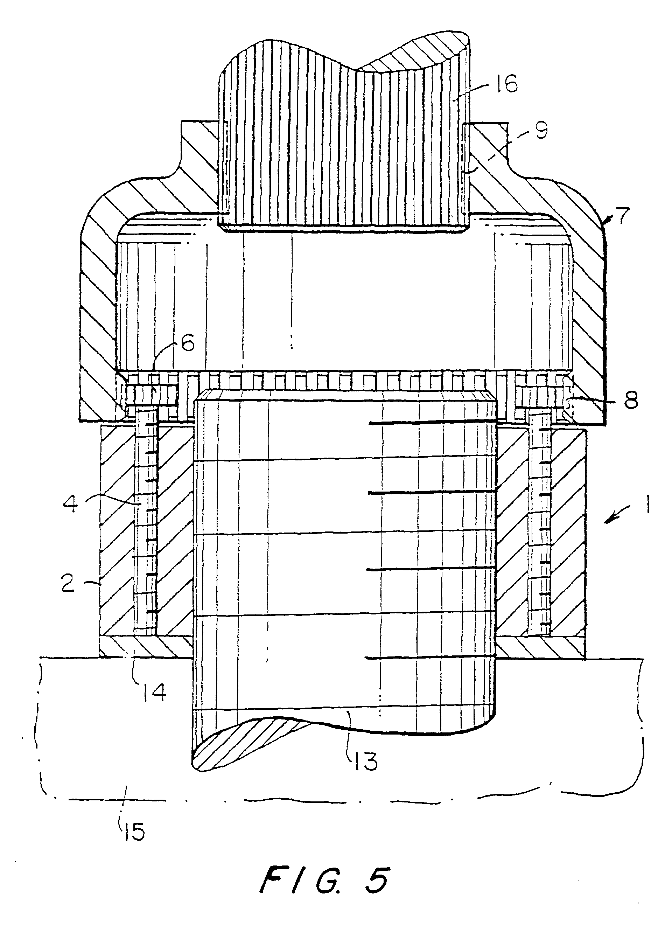

When it is necessary to tighten the nut on a screw threaded bolt 13, stud or the like, the screw members 4, which have equal lengths and similar screw threads, are arranged so that their lower ends 4" are flush with the lower end face of the nut member 2 as shown in Figure 5. The nut 1 is then screwed down on the bolt 13 until the lower end face of the nut member 2 abuts against an upper face of a hard washer 14 arranged on an upper surface of an object 15, for example a flange or the like. The socket 7 is then fitted over the nut 1 so that the internal teeth 8 of the socket 7 engage outwardly and mesh with the similarly sized gears 6 of the screw members 4 of the nut. A driving shaft 16 of a tool, e.g. a power tool, is inserted into the opposite end of the socket 7 and its splines engage with the splines 9 of the socket. When the driving shaft 16 of the tool is turned in a given direction, the screw members 4 are turned at an equal speed and to equal degrees so that the ends 4" project from the holes 5 in which they are received and press against the washer 14 thereby pushing the nut member 2 away from the washer until a combined precalculated torque is attained. The lower face of the nut 1 and the upper face of the washer 14 are parallel to one another and all the screw members 4 have the same torque applied since the tilting action and the unknown coefficient of friction of the screws, which existed in the prior art nuts, are eliminated. All the screw members 4 are turned simultaneously to tighten the nut 1 on the bolt 13.

If the element 10 of Figure 4 is used instead of the socket 7, its teeth 11 engage the gears 6 of the unit 1 from inside.

The loosening of the nut 1 from the bolt 13 is performed in a reverse order.

Although it is preferred that the gears 6 are equally peripherally spaced apart so that equal loads are applied around the nut, such an arrangement is not absolutely essential. Preferably the gears 6 are of similar size with their turning axes spaced equidistantly from a common axis parallel to, and preferably coaxial with, the axis of the inner screw thread 3.

While the invention has been illustrated and described as embodied in a nut and a nut tightening/loosening arrangement provided with such a nut, it is not intended to be limited to the details shown, since various modifications and structural changes may be made without departing in any way from the present invention as defined by the claims.

## Claims

1. A nut (1) for a bolt or the like comprising a nut member (2) provided with an inner screw-threaded bore (3) for screw threaded engagement with a screw thread of bolt means (13) and a plurality of outer screw threaded bores (5) arranged around the inner screw-threaded bore (3), and a plurality of screw members (4) screw threadedly engaged in said outer screw-threaded bores (5) and each having a first end (4") adapted to abut against an object (14) and an opposite second end (4'), **characterised in that** said second end (4') of each of said screw members (4) is provided with a gear (6) formed and arranged so that all of said gears (6) of all said screw members (4) can be engaged simultaneously by an additional element (7) and turned simultaneously so as to turn simultaneously all said screw members (4).

2. A nut (1) for a bolt or the like comprising a nut member (2) provided with a thread (3) engageable with a thread of bolt means (13), and a plurality of screw members (4) screwable in said nut member (2) and having a first end (4") adapted to abut against an object (14) and an opposite second end (4'), **characterised in that** said second end (4') of each of said screw members (4) is provided with a gear (6) formed so that all of said gears (6) of all said screw members (4) can be engaged simultaneously by an additional element (7) and turned simultaneously so as to turn simultaneously all said screw members (4).

3. A nut according to claim 1 or 2, **characterised in that** said nut member (2) has an axis and **in that** said screw members (4) extend in an axial direction and are arranged at substantially equal peripheral distances around said axis of said nut member (2).

4. A nut according to claim 3, **characterised in that** said gears are similarly sized and **in that** the turning axes of said gears (6) are equally spaced radially from the said axis of the nut member (2).

5. A nut tightening and loosening arrangement comprising a nut (1) as claimed in any one of the preceding claims and an element (7 or 10) having engaging means (8 or 11) for simultaneously engaging all said gears (6) of all said screw members (4) and, when so engaged, being turnable to enable all said gears (6) and thereby all said screw members (4) to be turned simultaneously.

6. An arrangement according to claim 5, **characterised in that** said engaging means comprises internal teeth (8) for meshing with external teeth of said gears (6).

7. An arrangement according to claim 6, **characterised in that** said element (7) is formed as a socket having one end provided with said internal teeth (8) and another end provided with an additional formation (9) engageable by a tool.

8. An arrangement according to claim 5, **characterised in that** said engaging means comprises outer teeth (11) for meshing with external teeth of said gears (6).

9. An arrangement according to claim 8, **characterised in that** said element (10) is formed as a disk having an outer surface provided with said outer teeth (11) and an additional formation (12) engageable by a tool.

10. A method of tightening or loosening a joint comprising a nut (1) as claimed in any one of claims 1 to 4, bolt means (13) on which the nut (1) is screw threadedly connected and abutment means (14) against which the nut (1) abuts, **characterised in that** the method comprises simultaneously engaging the gears (6) with a toothed element (7 or 10) and turning the toothed element (7 or 10) to turn simultaneously all said screw members (4) so that said second ends (4") of the screw members press against the abutment means (14) and the nut member (2) is moved towards or away from the abutment means (14), in dependence on the direction of turning of the toothed element (7 or 10), to tighten or loosen the joint.

## Patentansprüche

1. Mutter (1) für eine Schraube oder dergleichen mit einem Mutterglied (2), das eine Innengewindebohrung (3) zum Gewindeeingriff mit einem Schraubgewinde eines Schraubenmittels (13) und mehrere um die Innengewindebohrung (3) herum angeordnete Außengewindebohrungen (5) enthält, und mehreren Schraubgliedern (4), die in den Außengewindebohrungen (5) in Gewindeeingriff stehen und jeweils ein erstes Ende (4"), das zum Anstoßen an einen Gegenstand (14) ausgeführt ist, und ein gegenüberliegendes zweites Ende (4') aufweisen, **dadurch gekennzeichnet, daß** das zweite Ende (4') jedes der Schraubglieder (4) mit einem Zahnrad (6) versehen ist, das so ausgebildet und angeordnet ist, **daß** sämtliche Zahnräder (6) aller Schraubglieder (4) durch ein zusätzliches Element (7) gleichzeitig in Eingriff genommen und gleichzeitig gedreht werden können, so **daß** alle Schraubglieder (4) gleichzeitig gedreht werden.

2. Mutter (1) für eine Schraube oder dergleichen mit einem Mutterglied (2), das mit einem mit einem Gewinde eines Schraubenmittels (13) in Eingriff bringbaren Gewinde (3) versehen ist, und mehreren in das Mutterglied (2) schraubbaren Schraubgliedern (4), die ein zum Anstoßen an einen Gegenstand (14) ausgeführtes erstes Ende (4") und ein gegenüberliegendes zweites Ende (4') aufweisen, **dadurch gekennzeichnet, daß** das zweite Ende (4') jedes der Schraubglieder (4) mit einem Zahnrad (6) versehen ist, das so ausgebildet ist, **daß** sämtliche Zahnräder (6) aller Schraubglieder (4) durch ein zusätzliches Element (7) gleichzeitig in Eingriff genommen und gleichzeitig gedreht werden können, so **daß** alle Schraubglieder (4) gleichzeitig gedreht werden.

3. Mutter nach Anspruch 1 oder 2, **dadurch gekennzeichnet, daß** das Mutterglied (2) eine Achse aufweist und **daß** sich die Schraubglieder (4) in einer axialen Richtung erstrecken und im wesentlichen in gleichen Umfangsabständen um die Achse des Mutterglieds (2) herum angeordnet sind.

4. Mutter nach Anspruch 3, **dadurch gekennzeichnet, daß** die Zahnräder ähnlich dimensioniert sind und **daß** die Drehachsen der Zahnräder (6) in gleichen radialen Abständen von der Achse des Mutterglieds (2) angeordnet sind.

5. Anordnung zum Festziehen und Lösen einer Mutter mit einer Mutter (1) nach einem der vorhergehenden Ansprüche und einem Element (7 oder 10), das ein Eingriffsmittel (8 oder 11) zum gleichzeitigen Eingriff aller Zahnräder (6) aller Schraubglieder (4) aufweist und, wenn es so mit diesen in Eingriff steht, drehbar ist, damit ein gleichzeitiges Drehen aller Zahnräder (6) und dadurch aller Schraubglieder (4) ermöglicht wird.

6. Anordnung nach Anspruch 5, **dadurch gekennzeichnet, daß** das Eingriffsmittel innere Zähne (8) zum Eingriff mit äußeren Zähnen der Zahnräder (6) umfaßt.

7. Anordnung nach Anspruch 6, **dadurch gekennzeichnet, daß** das Element (7) als eine Buchse ausgebildet ist, deren eines Ende mit den inneren Zähnen (8) und deren anderes Ende mit einer von einem Werkzeug in Eingriff nehmbaren zusätzlichen Ausbildung (9) versehen ist.

8. Anordnung nach Anspruch 5, **dadurch gekennzeichnet, daß** das Eingriffsmittel äußere Zähne (11) zum Eingriff mit äußeren Zähnen der Zahnräder (6) umfaßt.

9. Anordnung nach Anspruch 8, **dadurch gekennzeichnet, daß** das Element (10) als Scheibe ausgebildet ist, deren Außenfläche mit den äußeren Zähnen (11) und einer von einem Werkzeug in Eingriff nehmbaren zusätzlichen Ausbildung (12) versehen ist.

10. Verfahren zum Festziehen und Lösen einer Verbindung mit einer Mutter (1) nach einem der Ansprüche 1 bis 4, einem Schraubenmittel (13), mit dem die Mutter (1) in Gewindeeingriff steht, und einem Anstoßmittel (14), an das die Mutter (1) anstößt, **dadurch gekennzeichnet, daß** man bei dem Verfahren die Zahnräder (6) mit einem Zahnelement (7 oder 10) gleichzeitig in Eingriff nimmt und das Zahnelement (7 oder 10) dreht, um alle Schraubglieder (4) gleichzeitig zu drehen, so **daß** die zweiten Enden (4") der Schraubglieder gegen das Anstoßmittel (14) drücken und das Mutterglied (2) je nach Drehrichtung des Zahnelements (7 oder 10) auf das Anstoßmittel (14) zu oder von ihm weg bewegt wird, um die Verbindung festzuziehen oder zu lösen.

## Revendications

1. Ecrou (1) pour un boulon ou similaire comprenant un organe d'écrou (2) pourvu d'un alésage fileté intérieur (3) destiné à s'engager par filetage avec un filetage d'un moyen de boulon (13) et d'une pluralité d'alésages filetés extérieurs (5) prévus autour de l'alésage fileté intérieur (3), et une pluralité d'organes de vis (4) engagés par filetage dans lesdits alésages filetés extérieurs (5) et ayant chacun une première extrémité (4") prévue pour venir buter contre un objet (14) et une deuxième extrémité opposée (4'), **caractérisé en ce que** ladite deuxième extrémité (4') de chacun desdits organes de vis (4) est pourvue d'un engrenage (6) formé et arrangé de telle sorte que tous lesdits engrenages (6) de tous lesdits organes de vis (4) puissent être engagés simultanément par un élément supplémentaire (7) et être tournés simultanément de manière à faire tourner simultanément tous lesdits organes de vis (4).

2. Ecrou (1) pour un boulon ou similaire comprenant un organe d'écrou (2) pourvu d'un filetage (3) pouvant être engagé avec un filetage d'un moyen de boulon (13), et une pluralité d'organes de vis (4) pouvant être vissés dans ledit organe d'écrou (2) et ayant une première extrémité (4") prévue pour buter contre un objet (14) et une deuxième extrémité opposée (4'), **caractérisé en ce que** ladite deuxième extrémité (4') de chacun desdits organes de vis (4) est pourvue d'un engrenage (6) formé de telle sorte que tous lesdits engrenages (6) de tous lesdits organes de vis (4) puissent être engagés simultanément par un élément supplémentaire (7) et être tournés simultanément de manière à faire tourner simultanément tous lesdits organes de vis (4).

3. Ecrou selon la revendication 1 ou 2, **caractérisé en ce que** ledit organe d'écrou (2) a un axe et **en ce que** lesdits organes de vis (4) s'étendent dans une direction axiale et sont arrangés à des distances périphériques substantiellement égales autour dudit axe dudit organe d'écrou (2).

4. Ecrou selon la revendication 3, **caractérisé en ce que** lesdits engrenages sont de tailles similaires et **en ce que** les axes de rotation desdits engrenages (6) sont espacés uniformément radialement depuis ledit axe de l'organe d'écrou (2).

5. Dispositif pour serrer et desserrer un écrou comprenant un écrou (1) selon l'une quelconque des revendications précédentes, et un élément (7 ou 10) ayant un moyen d'engagement (8 ou 11) pour engager simultanément tous lesdits engrenages (6) de tous lesdits organes de vis (4) et, lorsqu'ils sont ainsi engagés, étant susceptible de tourner pour permettre à tous lesdits engrenages (6) et donc tous lesdits organes de vis (4) d'être tournés simultanément.

6. Dispositif selon la revendication 5, **caractérisé en ce que** ledit moyen d'engagement comprend des dents internes (8) pour s'engrener avec des dents externes desdits engrenages (6).

7. Dispositif selon la revendication 6, **caractérisé en ce que** ledit élément (7) est formé sous la forme d'une douille ayant une extrémité pourvue desdites dents internes (8) et une autre extrémité pourvue d'une formation supplémentaire (9) pouvant être engagée par un outil.

8. Dispositif selon la revendication 5, **caractérisé en ce que** ledit moyen d'engagement comprend des dents externes (11) pour s'engrener avec des dents externes desdits engrenages (6).

9. Dispositif selon la revendication 8, **caractérisé en ce que** ledit élément (10) est formé sous la forme d'un disque ayant une surface externe pourvue desdites dents externes (11) et d'une formation supplémentaire (12) pouvant être engagée par un outil.

10. Procédé pour serrer ou desserrer un joint comprenant un écrou (1) selon l'une quelconque des revendications 1 à 4, un moyen de boulon (13) sur lequel l'écrou (1) est connecté par filetage et un moyen de butée (14) contre lequel l'écrou (1) vient buter, **caractérisé en ce que** le procédé comprend le fait d'engager simultanément les engrenages (6) avec un élément denté (7 ou 10) et la rotation de l'élément denté (7 ou 10) pour faire tourner simultanément tous lesdits organes de vis (4) de sorte que lesdites deuxièmes extrémités (4") des organes de vis pressent contre le moyen de butée (14) et que l'organe d'écrou (2) soit déplacé vers ou depuis le moyen de butée (14), en fonction du sens de rotation de l'élément denté (7 ou 10), pour serrer ou desserrer le joint.
